# EUROPÄISCHE PATENTSCHRIFT

(11) **EP 1 138 875 B1**
(45) Veröffentlichungstag und Bekanntmachung des Hinweises auf die Patenterteilung: **27.08.2003**
(21) Anmeldenummer: 01116066.0
(22) Anmeldetag: 23.03.1998
(51) Int. Cl.: F01B 3/00, F04B 1/12, F16C 11/06

(54) **Verfahren zum Herstellen einer Kugelgelenkverbindung**
Process for manufacturing a ball joint
Procédé de fabrication d'une articulation à rotule

(30) Priorität: 26.03.1997 DE 19712838; 22.04.1997 DE 19716880
(43) Veröffentlichungstag der Anmeldung: 04.10.2001
(62) Teilanmeldung aus: 98917056.8
(73) Patentinhaber: BRUENINGHAUS HYDROMATIK GMBH, 89275 Elchingen (DE)
(72) Erfinder: Hühn, Bernd, 89275 Elchingen (DE); Lotter, Manfred, 89231 Neu-Ulm (DE); Kunze, Thomas, 89297 Roggenburg (DE); Stölzer, Rainer, 89291 Neu-Ulm (DE)
(74) Vertreter: Körfer, Thomas, Dipl.-Phys.

(56) Entgegenhaltungen:
- DE-A- 2 132 252
- DE-A- 2 643 780
- DE-A- 4 433 762
- FR-A- 2 634 839
- US-A- 3 802 323
- US-A- 3 953 139
- US-A- 4 630 957
- US-A- 5 564 853

## Beschreibung

Die Erfindung betrifft ein Verfahren zum Herstellen einer Kugelgelenkverbindung zwischen einem Gleitschuh und einem Zylinderkolben einer Kolbenmaschine, insbesondere einer Axialkolbenmaschine.

Bei Axialkolbenmaschinen in Schrägscheibenbauweise stützen sich die in Zylinderbohrungen bewegbaren Zylinderkolben über jeweils einen Gleitschuh an der Gleitfläche einer Schrägscheibe ab. Dabei ist es üblich, die Zylinderkolben mit den Gleitschuhen mittels einer Kugelgelenkverbindung zu verbinden, um in jeder Schrägstellung der Schrägscheibe eine flächige Anlage der Gleitsohle der Gleitschuhe an der Gleitfläche der Schrägscheibe zu gewährleisten.

Bei der Herstellung der Kugelgelenkverbindung ist es weitgehend üblich, den an dem Gleitschuh oder dem Zylinderkolben angeformten Kugelkopf in eine abgerundete Ausnehmung des entsprechenden Gegenstücks, also des Zylinderkolbens bzw. Gleitschuhs, einzusetzen. Die Ausnehmung ist dabei nur in einem Raumwinkelbereich von etwa 180° als Halb-Hohlkugel abgerundet. An diesem halbkugelförmigen Bereich der Ausnehmung schließt sich ein hohlzylinderförmiger Bereich an, der an einer Öffnung ausmündet. Der Öffnungsdurchmesser an der Öffnung der Ausnehmung entspricht dem Durchmesser im Bereich der Äquatorebene des halb-hohlkugelförmigen Bereichs der Ausnehmung. Beim Zusammenfügen des Gleitschuhs und des Zylinderkolbens wird der an einem der beiden Teile angeformte Kugelkopf in die Ausnehmung eingeführt und in der Ausnehmung formschlüssig verankert. Dies ist notwendig, damit über die Kugelgelenkverbindung während des Saughubs der Kolbenmaschine eine entsprechende Zugkraft übertragbar ist.

Bei einem gängigen Verfahren zur Verbindung des Kugelkopfs mit der korrespondierenden Ausnehmung wird nach Einführen des sphärischen Kugelkopfs der den Kugelkopf im Bereich der Öffnung der Ausnehmung umgebende Randbereich, z. B. mittels Walzen, umgebördelt. Ein solches Verfahren geht beispielsweise aus der DE-OS 1 776 027 hervor. Aus der DE-AS 21 32 252 ist es dagegen bekannt, daß zur Verankerung des Kugelkopfes des Gleitschuhs in der Ausnehmung des Zylinderkolbens ein Sperring eingesetzt wird, der sich gegen eine Innenfläche der Ausnehmung abstützt. Die beiden vorstehend genannten Verfahren sind relativ aufwendig und in der Serienfertigung mit relativ hohen Fertigungs- und Montagekosten verbunden.

Die plastische Verformung des Zylinderkolbens in dem die kalottenförmige Ausnehmung umgebenden Randbereich ist insofern mit Nachteilen behaftet, als der Kolben z. B. durch Nitrieren und einer Wärmebehandlung einer speziellen Härtung unterworfen wird, um die Verschleißfestigkeit zu verbessern. Diese Härtung steht jedoch einer nachfolgenden plastischen Verformung entgegen, so daß der die kalottenförmige Ausnehmung umgebende Bereich von der Wärmebehandlung ausgespart werden muß, was einen erheblichen Mehraufwand bedeutet. Ferner besteht das Problem, daß die zur Verformung des in der Regel aus Stahl gefertigten Zylinderkolbens erforderliche hohe Preßkraft zu einer unerwünschten Mitverformung des zur Verbesserung der Gleiteigenschaften aus einer Kupfer- oder Bronzelegierung bestehenden Kugelkopfes des Gleitschuhs führt. In der Praxis ist es daher erforderlich, den Gleitschuh zweiteilig mit einem aus einer Kupfer- oder Bronzelegierung gefertigten Gleitteil und einer in dieses eingesetzten Stahlkugel auszubilden.

In jedem Fall ist für die Umbördelung ein zusätzlicher, aufwendiger Arbeitsschritt erforderlich. Das Einsetzen eines Sperrings zur Verriegelung des Kugelkopfes erhöht die Anzahl der für die Montage notwendigen Teile und hat sich aufgrund des hohen Montage- und Fertigungsaufwands in der Praxis nicht bewährt.

Aus der DE 42 14 765 A1 ist es bekannt, den Kugelkopf der Gleitschuhe mit einer bezüglich der Längsachse der Gleitschuhe abgewinkelten Abflachung zu versehen. Nach Einsetzen des Kugelkopfs in die Ausnehmung des Zylinderkolbens ist es möglich, den Kugelkopf in der Ausnehmung so zu verkanten, daß dieser aus der Ausnehmung nicht herausgezogen werden kann. Dieses Verfahren hat jedoch den Nachteil, daß die Grenzfläche zwischen dem Kugelkopf des Gleitschuhs und der Ausnehmung des Zylinderkolbens im Bereich der Kanten des Kugelkopfs einem erhöhten Verschleiß unterworfen ist. Ferner ist die Auflagefläche durch die Abflachung deutlich verringert. Des weiteren ist der Schwenkwinkel, welchen die Schrägscheibe gegenüber der Zylindertrommel einnehmen kann, erheblich begrenzt. Dieses Verfahren ist insbesondere bei Axialkolbenmaschinen mit in beiden Schwenkrichtungen verschwenkbaren Schrägscheiben nicht anwendbar.

Kugelgelenke aus anderen Fachbereichen, bei welchen der Randbereich der Ausnehmung elastisch verformt wird, um den Kugelkopf einzusetzen, gehen aus der DE 44 33 762 A1, der US 4,630,957, der FR 2 634 839 und der US 3,802,323 hervor.

Der Erfindung liegt daher die Aufgabe zugrunde, ein Verfahren zum Herstellen einer Kugelgelenkverbindung zwischen einem Gleitschuh und einem Zylinderkolben einer Kolbenmaschine anzugeben, welches eine rationelle und kostengünstige Serienfertigung ermöglicht.

Die Aufgabe wird durch die Merkmale des Anspruchs 1 in Verbindung mit den gattungsbildenden Merkmalen gelöst. Der Lösung liegt dabei die Erkenntnis zugrunde, daß ein kostengünstiges Zusammenfügen des Kugelgelenks dadurch erreicht werden kann, daß der die Ausnehmung umgebender Randbereich beim Zusammenfügen elastisch verformt wird und der Kugelkopf in die Ausnehmung nach Art eines Schnappverschlusses eingedrückt wird. Das Eindrücken des Kugelkopfes in die Ausnehmung wird dadurch erleichtert, daß die Ausnehmung mit einem flüssigen oder gasförmigen Druckmedium beaufschlagt wird, welches über eine Bohrung in dem Zylinderkolben oder dem Gleitschuh zugeleitet wird. Auf diese Weise wird eine elastische Aufweitung des Randbereichs der Ausnehmung erzielt.

Die Ansprüche 2 und 3 betreffen vorteilhafte Weiterbildungen der Lösung nach Anspruch 1.

Die elastische Spannungsverteilung beim Eindrücken des Kugelkopfes in die kalottenförmige Ausnehmung ist radial möglichst gleichmäßig zu Verteilen. Die elastische Verformung des die Ausnehmung umgebenden Randbereiches kann auch dadurch begünstigt werden, daß in dem Randbereich radial verlaufende Schlitze vorgesehen sind.

Nachfolgend werden Ausführungsbeispiele der Erfindung unter Bezugnahme auf die Zeichnung näher beschrieben. In der Zeichnung zeigen
- Fig. 1A: einen zur Ausführung des erfindungsgemäßen Verfahrens vorbereiteten Zylinderkolben entsprechend einem ersten Ausführungsbeispiel;
- Fig. 1B: die Zusammenfügung von Kugelkopf und kalottenförmiger Ausnehmung unter Zuhilfenahme eines Druckmediums;
- Fig. 1C: die fertige Kugelgelenkverbindung mit einem gleitschuhseitigen Kugelkopf, der in eine zylinderkolbenseitige Ausnehmung eingreift;

- Fig. 2: eine fertige Kugelgelenkverbindung mit einem zylinderkolbenseitigen Kugelkopf, die in eine gleitschuhseitige Ausnehmung eingreift; und
- Fig. 3: eine Ansicht des in Fig. 1A dargestellten Zylinderkolbens in axialer Richtung mit einer erfindungsgemäßen Weiterbildung.

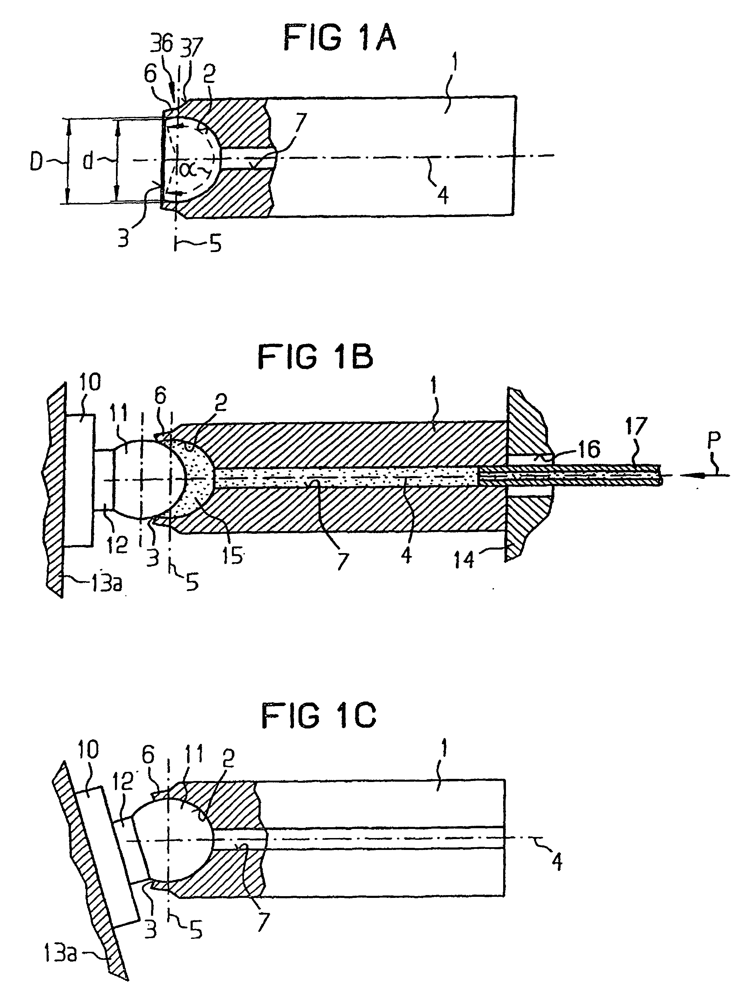

Fig. 1A zeigt einen zur Durchführung des erfindungsgemäßen Verfahrens vorbereiteten Zylinderkolben 1. Der Zylinderkolben 1 ist in an sich bekannter Weise in einer Zylinderbohrung der Kolbenmaschine, die bei einer Axialkolbenmaschine in Schrägscheibenbauweise z. B. in einer rotierenden Zylindertrommel angeordnet ist, bewegbar.

Der Zylinderkolben 1 weist an einem seiner Enden eine sphärische, kalottenförmige bzw. teilkugelförmige Ausnehmung 2 auf. Die kalottenförmige Ausnehmung 2 ist an der Stirnseite des Zylinderkolbens 1 an einer Öffnung 3 geöffnet. Erfindungswesentlich ist die Ausnehmung 2 dabei so hinterschnitten, daß die kalottenförmige Ausnehmung 2 einen Raumwinkelbereich von mehr als 180° umfaßt (α>180°). Anders ausgedrückt ist der Durchmesser d der Öffnung 3 kleiner bemessen als der Durchmesser D der Ausnehmung 2 im Bereich der sich senkrecht zu der Längsachse 4 erstreckenden Äquatorebene 5. Zur Verdeutlichung sind der Öffnungsdurchmesser d und der Durchmesser D der Ausnehmung 2 im Bereich der Äquatorebene 5 in Fig. 1A eingezeichnet. Zwischen der Äquatorebene 5 und der Öffnung 3 weist die kalottenförmige Ausnehmung 2 einen elastisch verformbaren Randbereich 6 auf. Der Zylinderkolben 1 kann homogen aus einem elastischen, schwer verformbaren Material, insbesondere mittels einer Wärmebehandlung aus nitriertem Stahl gefertigt sein. Im Gegensatz zu dem aus dem Stand der Technik bekannten Umbördelungsverfahren, kommt es bei dem erfindungsgemäßen Verfahren nicht auf die plastische Verformbarkeit des Randbereichs 6 an. Der Zylinderkolben 1 kann bei der Nitrierung daher einer homogenen, gleichmäßigen Wärmebehandlung unterworfen werden, ohne daß der Randbereich 6 der Ausnehmung 2 von dieser Behandlung ausgenommen werden muß und ein dafür notwendiger Mehraufwand notwendig würde.

Die kalottenförmige Ausnehmung 2 ist in an sich bekannter Weise über eine Längsbohrung 7 mit der nicht dargestellten Zylinderbohrung der Kolbenmaschine verbunden, um über eine in dem zugehörigen Gleitschuh ebenfalls vorgesehene Längsbohrung einen Druckmittelfluß zu der Gleitsohle des Gleitschuhs zu ermöglichen und so eine Schmierwirkung und eine hydraulische Entlastung zu bewirken.

Fig. 1B zeigt den Verfahrensschritt des Eindrückens des an dem Gleitschuh 10 über einen Kragenabschnitt 12 angeformten Kugelkopfes 11. Der Kugelkopf 11 ist in Form einer Teilkugel sphärisch ausgeformt, wobei der Durchmesser des Kugelkopfes 11, abgesehen von einem geringfügigen Lagerspiel, mit dem äquatorialen Durchmesser D der kalottenförmigen Ausnehmung 2 übereinstimmt.

Zum Eindrücken des Kugelkopfes 11 in die kalottenförmige Ausnehmung 2 des Zylinderkolbens 1 ist die Anordnung bestehend aus dem Gleitschuh 10 und dem Zylinderkolben 1 zwischen zwei Klemmbacken 13 und 14 eingespannt, die beim Eindrücken des Kugelkopfes 11 in die kalottenförmige Ausnehmung 2 aufeinander zu bewegt werden. Dabei stützt sich der Gleitschuh 10 an der ersten Klemmbacke 13 und der Zylinderkolben 1 an der zweiten Klemmbacke 14 ab. Während des Eindrückens des Kugelkopfes 11 in die kalottenförmige Ausnehmung 2 wird der die kalottenförmige Ausnehmung 2 im Bereich zwischen der Öffnung 3 und der Äquatorebene 5 umgebende Randbereich 6 elastisch verformt bzw. aufgeweitet, so daß der Randbereich 6 den Kugelkopf 11 hintergreift. Der fertige Montagezustand ist in der Fig. 1C dargestellt.

Zur Erleichterung der Aufweitung des die kalottenförmige Ausnehmung 2 umgebenden Randbereichs 6 kann die kalottenförmige Ausnehmung 2 mit einem flüssigen oder gasförmigen Druckmedium 15 beaufschlagt werden. Diese Maßnahme stellt jedoch nur eine nicht zwingende Weiterbildung der Erfindung dar. Dazu ist über eine Bohrung 16 in der zweiten Klemmbacke 15 eine Rohrleitung 17 in die Längsbohrung 7 des Zylinderkolbens 1 eingeführt. Über die Rohrleitung 17 und die Längsbohrung 7 wird das flüssige oder gasförmige Druckmedium 15, z. B. ein Hydrauliköl oder Preßluft, der kalottenförmigen Ausnehmung 2 zugeführt, um die Aufweitung des Randbereichs 6 zu erleichtern. In gleicher Weise ist es auch möglich, das Druckmedium über eine nicht dargestellte Bohrung in dem Gleitschuh 10 der kalottenförmigen Ausnehmung 2 zuzuführen.

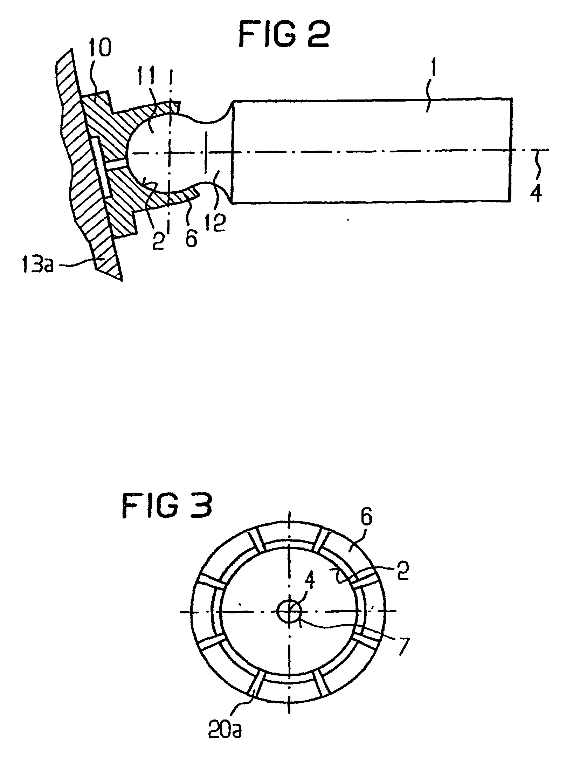

Fig. 2 zeigt ein Ausführungsbeispiel einer umgekehrten Kugelgelenkverbindung, wobei der Kugelkopf 11 über einen Halsabschnitt 12 an dem Zylinderkolben 1 angeformt ist und die kalottenförmige, sphärische Ausnehmung 2 an dem Gleitschuh 10 vorgesehen ist. Das erfindungsgemäße Verfahren eignet sich für eine derart ausgebildete Kugelgelenkverbindung in gleicher Weise, wobei auch in diesem Fall der die sphärische Ausnehmung 2 umgebende Randbereich 6 beim Eindrücken bzw. Einsetzen des Kugelkopfes 11 elastisch verformt wird.

Fig. 3 zeigt eine Sicht auf die an dem Zylinderkolben 1 vorgesehene sphärische Ausnehmung 2 entlang der Längsachse 4. Zu erkennen ist der die sphärische Ausnehmung 2 umgebende Randbereich 6 und die Längsbohrung 7. Entsprechend einer aus Fig. 3 zu ersehenden Weiterbildung der Erfindung ist der die kalottenförmige Ausnehmung 2 umgebende Randbereich 6 mit gleichmäßig verteilten, radialen Schlitzen 20a versehen. Die Schlitze 20a dienen der Erleichterung der elastischen Aufweitung des Randbereichs 6. Die Schlitze 20a sind jedoch keinesfalls zwingend erforderlich. Mit 13a ist eine Schrägscheibe bezeichnet, an der sich der Gleitschuh 10 abstützt.

Selbstverständlich kann das Verfahren in gleicher Weise auch dann zur Anwendung kommen, wenn der Kugelkopf 11 an den Zylinderkolben 1 und die sphärische, kalottenförmige Ausnehmung 2 an dem Gleitschuh 10 ausgebildet sind. Das erfindungsgemäße Verfahren ist insbesondere dann bevorzugt anwendbar, wenn der Zylinderkolben 1 aus Stahl und der Gleitschuh 10 aus einer Buntmetall-Legierung besteht.

Die vorliegende Erfindung ist nicht auf die dargestellten Ausführungsbeispiele begrenzt. Es sind eine Vielzahl weiterer Möglichkeiten zur entweder elastischen Verformung des die kalottenförmige Ausnehmung 2 umgebenden Randbereichs 6 oder zur plastischen Verformung des Kugelkopfes 11 denkbar.

## Patentansprüche

1. Verfahren zum Herstellen einer Kugelgelenkverbindung zwischen einem Gleitschuh (10) und einem Zylinderkolben (1) einer Kolbenmaschine mit folgenden Verfahrensschritten:
- Formen einer sphärischen, kalottenförmigen Ausnehmung (2) an dem Zylinderkolben (1) bzw. dem Gleitschuh (10), wobei die Ausnehmung (2) so hinterschnitten ist, daß die kalottenförmige Ausnehmung (2) einen Raumwinkelbereich (α) von mehr als 180° umfaßt und der Durchmesser (D) im Bereich der Äquatorebene (5) größer ist als der Öffnungsdurchmesser (d) der Ausnehmung (2),
- Formen eines sphärischen Kugelkopfes (11) an dem Gleitschuh (10) bzw. dem Zylinderkolben (1), und
- Eindrücken des Kugelkopfes (11) in die kalottenförmige Ausnehmung (2), wobei der die kalottenförmige Ausnehmung (2) umgebende Randbereich (6) beim Eindrücken des Kugelkopfes (11) elastisch verformt wird und den Kugelkopf (11) hintergreift,
wobei beim Eindrücken des Kugelkopfes (11) eine Aufweitung des die kalottenförmige Ausnehmung (2) umgebenden Randbereichs (6) durch ein flüssiges oder gasförmiges Druckmedium (15) unterstützt wird, das mit einem Druck (p) beaufschlagt wird,
wobei das flüssige oder gasförmige Druckmedium (15) über eine Bohrung (7) in dem Zylinderkolben (1) oder dem Gleitschuh (10) der kalottenförmigen Ausnehmung (2) zugeleitet wird.

2. Verfahren nach Anspruch 1,
**dadurch gekennzeichnet,**
**daß** beim Eindrücken des Kugelkopfes (11) eine radial gleichmäßige, elastische Spannungsverteilung in dem die kalottenförmige Ausnehmung (2) umgebenden Randbereich (6) herrscht.

3. Verfahren nach Anspruch 1 oder 2,
**dadurch gekennzeichnet,**
**daß** der die kalottenförmige Ausnehmung (2) umgebende Randbereich (6) zur Erleichterung der elastischen Verformung mit radial verlaufenden Schlitzen (20a) versehen ist.

## Claims

1. Method of manufacturing a ball-joint connection between a sliding block (10) and a cylinder piston (1) of a piston machine, the said method comprising the following steps:
- the forming of a spherical, cap-shaped recess (2) on the cylinder piston (1) or on the sliding block (10), wherein the said recess (2) is undercut in such a way that the cap-shaped recess (2) encompasses a solid-angle region (α) of more than 180° and the diameter (D) in the region of the equatorial plane (5) is greater than the diameter (d) of the opening of the recess (2),
- the forming of a spherical ball head (11) on the sliding block (10) or on the cylinder piston (1), and
- the pressing of the ball head (11) into the cap-shaped recess (2), wherein the rim region (6) surrounding the said cap-shaped recess (2) is elastically deformed during the pressing-in of the ball head (11), and engages behind the said ball head (11),
wherein, during the pressing-in of the ball head (11), an expansion of the rim region (6) surrounding the cap-shaped recess (2) is aided by a liquid or gaseous pressure medium (15) which is acted upon by a pressure (p), and
wherein the liquid or gaseous pressure medium (15) is fed to the cap-shaped recess (2) via a bore (7) in the cylinder piston (1) or the sliding block (10).

2. Method according to claim 1,
**characterised in that,**
a radially uniform, elastic stress distribution prevails in the rim region (6) surrounding the cap-shaped recess (2) during the pressing-in of the ball head (11).

3. Method according to claim 1 or 2,
**characterised in that**
the rim region (6) surrounding the cap-shaped recess (2) is provided with radially extending slits (20a) for the purpose of facilitating the elastic deformation.

## Revendications

1. Procédé de fabrication d'une articulation à rotule entre un patin de guidage (10) et un piston de cylindre (1) d'une machine à piston, comprenant les étapes suivantes :
- on forme un évidement (2) sphérique en forme de calotte sur le piston de cylindre (1) ou sur le patin de guidage (10), en contre-dépouillant l'évidement (2) de telle sorte que l'évidement (2) en forme de calotte couvre une région angulaire (α) de plus de 180° et que le diamètre (D) dans la région du plan équatorial (5) soit supérieur au diamètre d'ouverture (d) de l'évidement (2),
- on forme une tête sphérique (11) sur le patin de guidage (10) ou respectivement sur le piston de cylindre (1), et
- on enfonce la tête sphérique (11) dans l'évidement (2) en forme de calotte, la région de bord (6) qui entoure l'évidement (2) en forme de calotte étant élastiquement déformée lorsqu'on enfonce la tête sphérique (11) et s'engageant derrière la tête sphérique (11),
lors de l'enfoncement de la tête sphérique (11) un élargissement de la région de bord (6) qui entoure l'évidement (2) en forme de calotte étant aidé par un fluide (15) liquide ou gazeux sous pression qui est appliqué avec une pression (p),
le fluide (15) liquide ou gazeux sous pression étant amené, via un perçage (7), à l'évidement (2) en forme de calotte du piston de cylindre (1) ou du patin de guidage (10).

2. Procédé selon la revendication 1, **caractérisé en ce que**, lorsqu'on enfonce la tête sphérique (11), une répartition élastique radialement uniforme de la contrainte règne dans la région de bord (6) qui entoure l'évidement (2) en forme de calotte.

3. Procédé selon la revendication 1 ou 2, **caractérisé en ce que** la région de bord (6) qui entoure l'évidement (2) en forme de calotte est pourvue de fentes (20a) s'étendant radialement, pour faciliter la déformation élastique.
